(19) Europäisches Patentamt

European Patent Office

Office européen des brevets

(11) Veröffentlichungsnummer: **0 329 824 B1**

(12) **EUROPÄISCHE PATENTSCHRIFT**

(45) Veröffentlichungstag der Patentschrift: **30.03.94**

(21) Anmeldenummer: **88114658.3**

(22) Anmeldetag: **08.09.88**

(51) Int. Cl.⁵: **G05D 1/10, F42B 10/66**

(54) Steuerung für einen fernlenkbaren rollenden Flugkörper.

(30) Priorität: **22.01.88 DE 3801795**

(43) Veröffentlichungstag der Anmeldung:
**30.08.89 Patentblatt 89/35**

(45) Bekanntmachung des Hinweises auf die
Patenterteilung:
**30.03.94 Patentblatt 94/13**

(84) Benannte Vertragsstaaten:
**CH DE FR GB LI SE**

(56) Entgegenhaltungen:
**EP-A- 0 244 971      FR-A- 2 367 659**
**GB-A- 2 090 433      US-A- 3 561 326**
**US-A- 4 328 938      US-A- 4 662 581**

(73) Patentinhaber: **Deutsche Aerospace AG**

**D-81663 München(DE)**

(72) Erfinder: **Sturm, Richard, Dipl.-Ing.**
**Neisseweg 3**
**D-8012 Ottobrunn(DE)**

EP 0 329 824 B1

**Beschreibung**

Die Erfindung betrifft eine Steuersystem für einen fernlenkbaren rollenden Flugkörper, der mit Hilfe von Stellgliedern um seine beiden Querachsen Nick- bzw. Gierbewegungen ausführen soll.

Die US 4 662 581 zeigt eine Methode zum Steuern der Vortriebsdüsen bei einem Nachbrenner. Das System dient dazu, parallel zur Längsachse in der $+X_m$ und $-x_m$ Richtung einen Schub zu erzeugen.

Bei bekannten Steuerungen werden Gasgeneratoren mit Düsen für den stoßweisen Durchsatz meist heißer Gase verwendet. Bei Änderungen des Schaltzustandes für auf die Gaszufuhr zu den Düsen einwirkende Stellglieder, wie Ventile, treten Totzeiten und Anstiegs- bzw. Abfallflanken oder andere Verzögerungen auf.

Aufgabe der Erfindung ist es eine Steuerung für ein Stellsystem zu schaffen, mit dem einerseits die Totzeiten und Verzögerungen des Stellsystems kompensiert werden können und andererseits die auf den Körper wirkenden Querkräfte fein dosiert werden können.

Dies wird mit der in Anspruch 1 angegebenen Lösung der Erfindung erreicht, obwohl bei einem Impulsbetrieb eines Stellsystems die Impulsdauer nicht beliebig verkleinerbar ist.

Ein wesentlicher Vorteil der Erfindung ist, daß trotz Impulsbetrieb des Stellsystems die Impulsdauer, mit der die Stellglieder phasenmoduliert angesteuert werden, nicht von der Größe der Stellkommandos abhängt und, daß man mit den Stellkommandos die Phasenlage für die Betätigung der Düsen exakt beeinflussen kann.

Weitere Ausbildungen, Gestaltungen, Ausführungen und Vorteile der Erfindung sind den weiteren Ansprüchen, der Beschreibung und Zeichnung von Ausführungsbeispielen - auch kombiniert miteinander - zu entnehmen. Es zeigen:

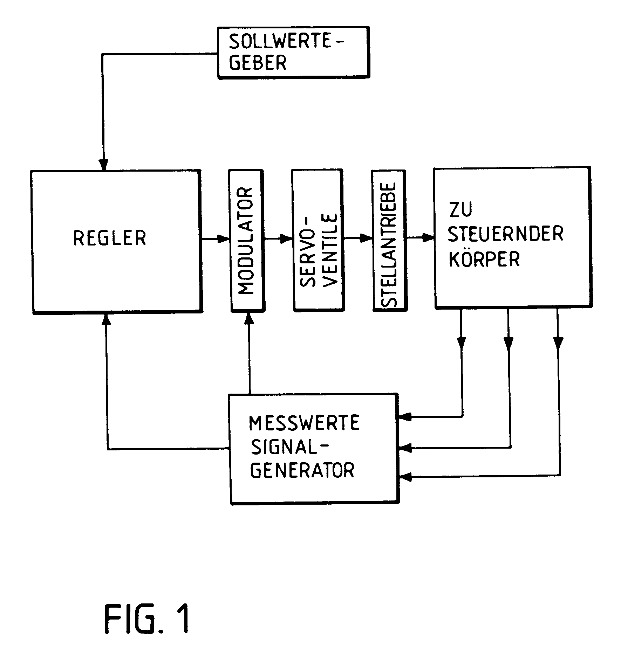

Fig. 1    ein Blockschaltbild eines Regelkreises mit Verwendung der Steuerung;
Fig. 2a   ein Schaltbild des Steuerkreises mit Komparatoren zur Gewinnung der Stellkommandos für einen rollenden Körper;
Fig. 2b   eine Anordnung von Stellantrieben (Düsen) am rollenden Körper;
Fig. 3    den Signalverlauf einer kommandierten Stellgröße $F_{YNK}$ und einer realisierten Stellgröße $F_{YN}$ im nichtrollenden Koordinatensystem in der Y-Achse;

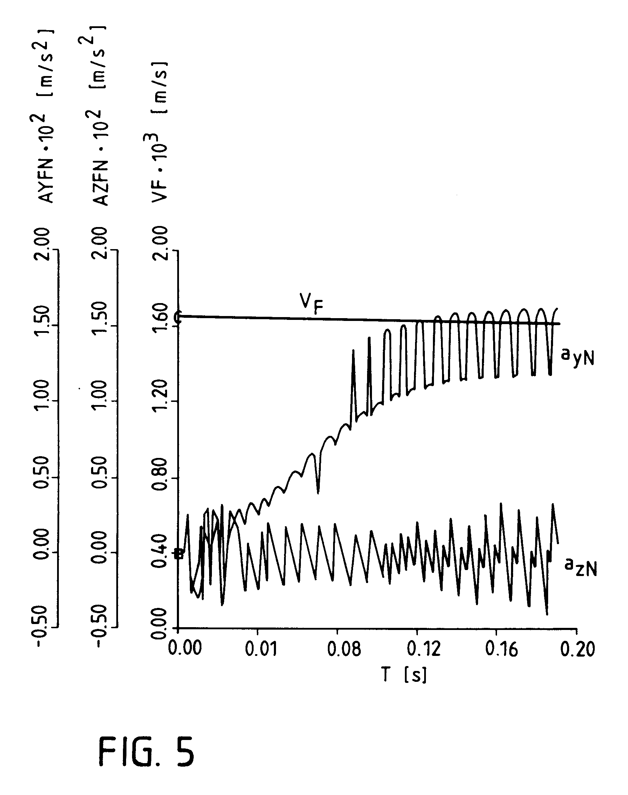

Fig. 5    ein Übergangsverhalten der Querbeschleunigung des Körpers in den Komponenten $a_{YN}$, $a_{ZN}$ des nichtrollenden Koordinatensystems.

Die im nichtrollenden Koordinatensystem vorliegenden Stellkommandos für den Gier- $F_{YNK}$ und Nickkanal $F_{ZNK}$ sind in die Kommandosignale $S_1$ -$S_8$ für die acht Stellglieder des rollenden Körpers umzusetzen. Die acht Stellglieder sind gleichmäßig am Umfang des Körpers verteilt. Die Schaltsignale sind so gestaltet, daß die resultierenden Stellgrößen aus den acht Stellgliedern $F_1$ - $F_8$ über eine viertel Umdrehung des Körpers gemittelt genau und möglichst verzögerungsfrei den Kommandos $F_{YNK}$ und $F_{ZNK}$ entsprechen.

Bei der Ansteuerung der acht Stellglieder sind folgende Randbedingungen zu berücksichtigen: Die Stellglieder haben Zweipunkt-Verhalten mit den stationären Zuständen Stellgröße, ein- bzw. ausgeschaltet. Bei Änderungen des Schaltzustandes treten Totzeiten und Anstiegs- bzw. Abfallflanken auf. Bei dem Einsatz von Heißgasdüsen als Stellglieder muß zur Einhaltung der Betriebsbedingungen des Gasgenerators ein konstanter mittlerer Gasdurchsatz gewährleistet sein, der dem Durchsatz von zwei Düsen entspricht.

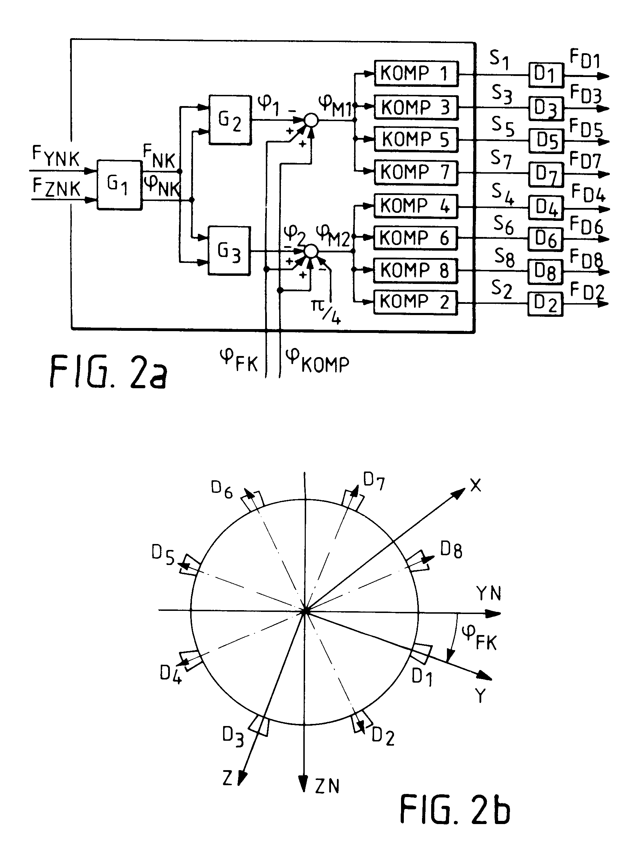

Fig. 2a zeigt ein Blockschaltbild des Phasenmodulators. Durch die Funktion $G_1$ werden die beiden rechtwinkligen Koordinaten $F_{YNK}$ und $F_{ZNK}$ des Stellkommandos in die Polarkoordinaten $F_{NK}$ und $\phi_{NK}$ transformiert.

$$F_{NK} = \sqrt{F_{YNK}^2 + F_{ZNK}^2}$$

Begrenzung: $F_{NK} \leq \sqrt{2} \cdot \frac{4}{\pi} \cdot F_D$
mit $F_D$ = Stellgröße eines Stellgliedes

$$\phi_{NK} = \text{Arc tg } \frac{F_{ZNK}}{F_{YNK}}$$

Durch die Funktionen $G_2$ und $G_3$ werden die Phasenwinkel $\phi_1$ und $\phi_2$ wie folgt gebildet:

$$\varphi_0 = \frac{1}{2}\{-\pi + \arccos\,[1-(\frac{\pi}{4} \cdot \frac{F_{NK}}{F_D})^2]\}$$

$\phi_1 = \phi_{NK} + \phi_0 \cdot \operatorname{sign}(\phi_{NK})$

$\phi_2 = 2 \cdot \phi_{NK} - \phi_1 - \pi \cdot \operatorname{sign}(\phi_{NK})$

Die Signale $\phi_{M1}$ und $\phi_{M2}$ werden wie folgt gebildet:

$\phi_{M1} = \phi_{FK} - \phi_1 + \phi_{KOMP}$

$\phi_{M2} = \phi_{FK} - \phi_2 + \phi_{KOMP} - \frac{\pi}{4}$

mit: $\phi_{FK}$ = Rollwinkel des Flugkörpers gegenüber dem nichtrollenden Koordinatensystem XN, YN, ZN

$\phi_{KOMP} = \phi_{FK} \cdot T$ = Signal zur Kompensation der Totzeit und der Verzögerung des Stellgliedes sowie weiterer Komponenten

Die Komparatoren 1, 3, 5 und 7 bilden aus dem Signal $\phi_{M1}$ die Kommandosignale $S_1$, $S_3$, $S_5$, $S_7$. Die Komparatoren 4, 6, 8 und 2 bilden aus dem Signal $\phi_{M2}$ die Kommandosignale $S_4$, $S_6$, $S_8$, $S_2$. Die Schaltbedingungen der acht Komparatoren sind in der Tabelle zusammengestellt.

| Komparator Nr. | Ausgangsgröße | Schaltbedingungen | |
|---|---|---|---|
| | | für S = L | für S = O |
| 1 | $S_1$ | $\cos\phi_{M1} > 1/\sqrt{2}$ | $\cos\phi_{M1} \leqq 1/\sqrt{2}$ |
| 3 | $S_3$ | $-\sin\phi_{M1} > 1/\sqrt{2}$ | $-\sin\phi_{M1} \leqq 1/\sqrt{2}$ |
| 5 | $S_5$ | $-\cos\phi_{M1} > 1/\sqrt{2}$ | $-\cos\phi_{M1} \leqq 1/\sqrt{2}$ |
| 7 | $S_7$ | $\sin\phi_{M1} > 1/\sqrt{2}$ | $\sin\phi_{M1} \leqq 1/\sqrt{2}$ |
| 4 | $S_4$ | $\cos\phi_{M2} > 1/\sqrt{2}$ | $\cos\phi_{M2} \leqq 1/\sqrt{2}$ |
| 6 | $S_6$ | $-\sin\phi_{M2} > 1/\sqrt{2}$ | $-\sin\phi_{M2} \leqq 1/\sqrt{2}$ |
| 8 | $S_8$ | $-\cos\phi_{M2} > 1/\sqrt{2}$ | $-\cos\phi_{M2} \leqq 1/\sqrt{2}$ |
| 2 | $S_2$ | $\sin\phi_{M2} > 1/\sqrt{2}$ | $\sin\phi_{M2} \leqq 1/\sqrt{2}$ |

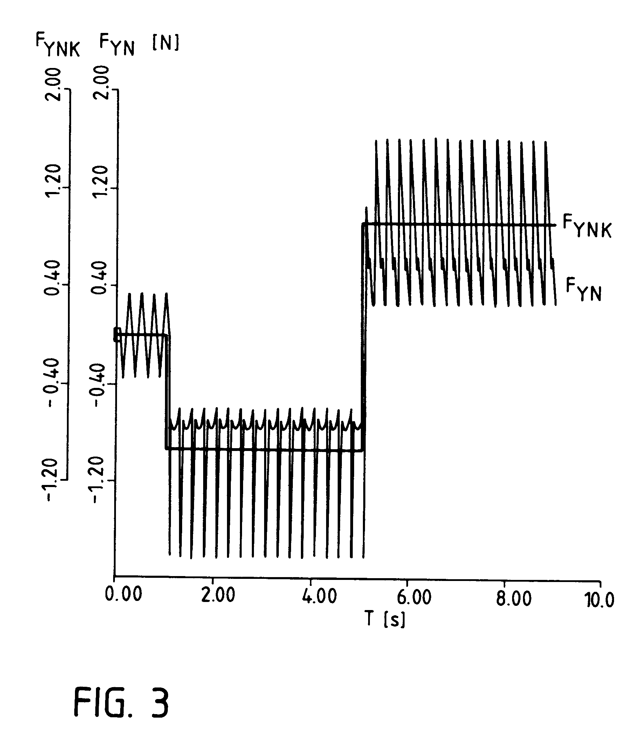

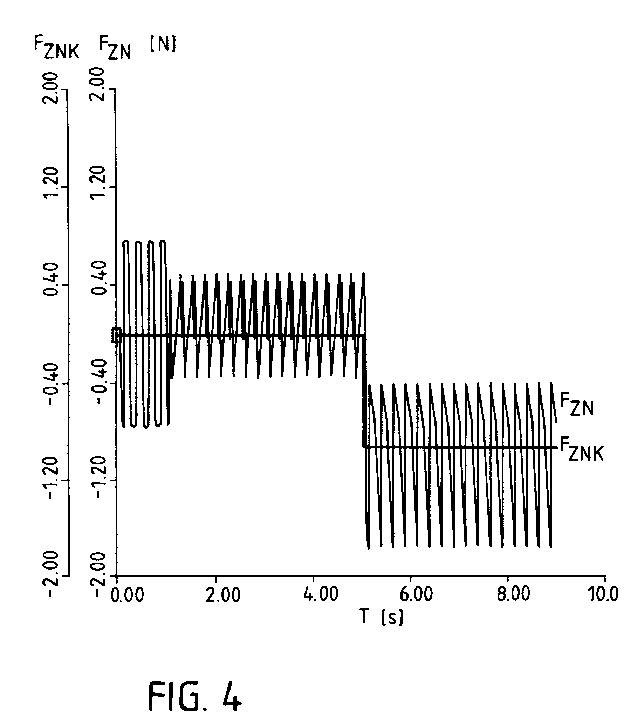

In den Fig. 3 und 4 ist der zeitliche Verlauf der Kommandos und der Stellgrößen aus einem Probelauf des Phasenmodulators dargestellt. Das erprobte System hatte folgende Betriebskenngrößen:

Rollwinkelgeschwindigkeit: $\phi_{FK} = 2\pi$ rad/s = 1 U/s

Schub einer Düse: D = 1 N

Totzeit einer Düse: $T_s$ = 62,5 m/s

Die kommandierten und realisierten Stellkräfte sind hierbei in der Fig. 3 für den Gierachsenkanal und in der Fig. 4 für den Nickachsenkanal aufgezeichnet. Der zeitliche Verlauf der Kommandos beträgt:

| | | |
|---|---|---|
| $0 \leqq t < 1$ s | $F_{YNK} = 0$ | $F_{ZNK} = 0$ |
| $1 \leqq t < 5$ s | $F_{YNK} = -0{,}9$ N | $F_{ZNK} = 0$ |
| $5 \leqq t < 9$ s | $F_{YNK} = 0{,}9$ N | $F_{ZNK} = -0{,}9$ N |

Die realisierten Stellkräfte $F_{YN}$ bzw. $F_{ZN}$ entsprechen über eine viertel Umdrehung (0,25 s) gemittelt genau den Kommandos $F_{YNK}$ bzw. $F_{ZNK}$.

Die ungerade indizierten Kommandos erreichen in aufsteigender Reihenfolge ($S_1$, $S_3$, $S_5$, $S_7$) nacheinander und lückenlos den Schaltzustand L, so daß immer eine ungerade indizierte Düse geöffnet ist. Unabhängig von der Größe der Stellkommandos sind jede der vier ungerade indizierten Stelldüsen für die Dauer einer viertel Umdrehung des Körpers betätigt. Die Größe der Stellkommandos beeinflußt nur die Phasenlage für die Betätigung der Düsen bezogen auf den Flugkörper-Rollwinkel $\phi_{FK}$. Das gleiche gilt auch für die gerade indizierten Kommandosignale ($S_2$, $S_4$, $S_6$, $S_8$), so daß immer jeweils eine ungerade und eine gerade indizierte Düse angesteuert werden.

EP 0 329 824 B1

Im gezeigten Beispiel treten kurz nach den Zeiten t = 1 s und 5 s Phasensprünge als Folge der Kommandosprünge auf.

Abwandlungen des Ausführungsbeispiels auf andere Anordnungen von Stellgliedern sind möglich. Das beschriebene Modulationsverfahren zur Ansteuerung von Stellgliedern mit Zweipunktverhalten kann bei jeder geraden Anzahl von Stellgliedern ab vier aufwärts eingesetzt werden, wenn diese gleichmäßig am Umfang des Körpers angeordnet sind und immer zwei gleichzeitig aktiv sein sollen.

**Patentansprüche**

1. Steuersystem für einen fernlenkbarenm, (um die X-Achse) rollenden Flugkörper, der mit Hilfe von Stellgliedern - nämlich durch Servoventile angesteuerte Düsen (um seine beiden Querachsen Y bzw. Z) Nick- bzw. Gierbewegungen ausführen soll, **dadurch gekennzeichnet**, daß

   a) eine Anzahl von ansteuerbaren Düsen ($D_1$ bis $D_8$) gleichmäßig verteilt am Umfang des Flugkörpers angeordnet sind, deren Schub radial auf den Körper wirkt,

   b) jede der Düsen ($D_1$ bis $D_8$) mit je einem Servoventil verbunden ist, zur feinen Dosierung des Fluid-Stromes durch die Düsen mittels der Stellkommandosignale,

   c) die Stellkommandosignale ($S_1$ bis $S_8$) in Abhängigkeit eines Rollwinkels des Flugkörpers erzeugt werden, derart, daß die Rollfrequenz die Impulsdauer der Stellkommandosignale bestimmt und

   d) die Servoventile mit Hilfe der Stellkommandosignale so ansteuerbar sind, daß immer mindestens zwei solcher aus der Anzahl der Düsen ($D_1$ bis $D_8$) aktivierbar sind, die jeweils gerade oder ungerade indiziert sind.

2. Steuersystem nach Anspruch 1, **dadurch gekennzeichnet**, daß die Anzahl der Stellglieder ($F_1$ - $F_8$) ebenso wie die der Düsen ($D_1$ -$D_8$) geradzahlig und gleich bzw. größer als vier ist und von einem Steuerkreis über einen Phasenmodulator die durch Servoventile angesteuerten Düsen ($D_1$ - $D_8$) den zu steuernden Körper jeweils um seine beiden Querachsen drehen.

3. Steuersystem nach einem der vorhergehenden Ansprüche, **dadurch gekennzeichnet**, daß die verwendeten Stellglieder Zweipunkt-Verhalten mit den stationären Zuständen:

   Stellgröße (S) eingeschaltet (S = L)

   oder

   Stellgröße (S) ausgeschaltet (S = O)

   aufweisen.

4. Steuersystem für einen fernlenkbaren, rollenden Flugkörper nach Anspruch 1, **dadurch gekennzeichnet**, daß es enthält: Mittel zum Erfassen eines Rollwinkels des Flugkörpers um ein entsprechendes Rollwinkelsignal dem Steuerkreis zuzuführen, so daß die Impulsdauer eines Stellkommandosignals nur durch die Rollfrequenz des Flugkörpers bestimmt ist.

**Claims**

1. A control system for a guided, rolling (about the X axis) missile, which is to execute pitching or yawing movements (about its two transverse axes Y and Z, respectively) with the aid of actuators - namely by means of nozzles triggered by servo valves, characterised in that

   a) a number of triggerable nozzles ($D_1$ to $D_8$), the thrust from which acts radially on the missile, are disposed uniformly distributed at the periphery of the missile,

   b) each of the nozzles ($D_1$ to $D_8$) is connected to a servo valve in each case for finely metering the fluid flow through the nozzles by means of adjustment command signals,

   c) the adjustment command signals ($S_1$ to $S_8$) are generated depending on an angle of roll of the missile in such a way that the rolling frequency determines the pulse duration of the adjustment command signals, and

   d) the servo valves can be triggered with the aid of the adjustment command signals so that at least two nozzles, each of which is even- or odd-numbered, can always be activated from the number of nozzles ($D_1$ to $D_8$).

4

**2.** A control system according to claim 1, characterised in that the number of actuators ($F_1$ - $F_8$) is an even number, as is that of the nozzles ($D_1$ - $D_8$), id is greater than or equal to four, and the nozzles ($D_1$ - $D_8$) triggered by servo valves from a control circuit via a phase modulator each rotate the missile to be controlled about its two transverse axes.

**3.** A control system according to any one of the preceding claims, characterised in that the actuators employed exhibit two-position control behaviour with the following fixed states:

regulating variable (S) switched on (S = L)

or

or regulating variable (S) switched off (S = O).

**4.** A control system for a guided, rolling missile according to claim 1, characterised in that it contains: means for detecting an angle of roll of the missile in order to supply a corresponding roll angle signal to the control circuit so that the pulse duration of an adjustment command signal is determined only by the rolling frequency of the missile.

**Revendications**

**1.** Système de commande pour un missile téléguidé roulant (autour de l'axe X) qui doit exécuter, à l'aide d'éléments de réglage, à savoir des tuyères commandées par des servovalves, des mouvements de tangage et de lacet (autour de ses deux axes transversaux Y et Z), **caractérisé** par le fait que
(a) une pluralité de tuyères commandées ($D_1$ à $D_8$) dont la poussée agit radialement sur le missile sont réparties uniformément sur le pourtour du missile,
(b) chacune des tuyères ($D_1$ à $D_8$) est reliée à une servovalve, en vue du dosage fin du flux de fluide à travers les tuyères à l'aide des signaux d'ordres de réglage,
(c) les signaux d'ordres de réglage ($S_1$ à $S_8$) sont produits en fonction d'un angle de roulis du missile de telle manière que la fréquence de roulis détermine la durée d'impulsions des signaux d'ordres de réglage, et
(d) les servovalves sont commandées à l'aide des signaux d'ordres de réglage de manière que deux au moins des tuyères ($D_1$ à $D_8$) portant respectivement un indice pair ou impair puissent toujours être activées.

**2.** Système de commande suivant la revendication 1, **caractérisé** par le fait que le nombre des éléments de réglage ($F_1$ à $F_8$) de même que le nombre des tuyères ($D_1$ à $D_8$) est pair et égal ou supérieur à quatre et les tuyères ($D_1$ à $D_8$) commandées par les servovalves à partir d'un circuit de commande en passant par un modulateur de phase font tourner le missile à commander respectivement autour de ses deux axes transversaux.

**3.** Système de commande suivant l'une des revendications précédentes, **caractérisé** par le fait que les éléments de réglage utilisés présentent un comportement binaire avec les états stationnaires:

Grandeur de réglage (S) en action (S = I)

ou

Grandeur de réglage (S) hors d'action (S = O)

**4.** Système de commande pour un missile téléguidé roulant, suivant la revendication 1, **caractérisé** par le fait qu'il comprend des moyens pour déterminer un angle de roulis du missile afin d'amener au circuit de commande un signal d'angle de roulis correspondant, de sorte que la durée d'impulsions d'un signal d'ordre de réglage n'est déterminée que par la fréquence de roulis du missile.

EP 0 329 824 B1

FIG. 1

FIG. 2a

FIG. 2b

FIG. 3

FIG. 4

EP 0 329 824 B1

FIG. 5

10